# EUROPÄISCHE PATENTSCHRIFT

(11) **EP 1 472 314 B1**
(45) Veröffentlichungstag und Bekanntmachung des Hinweises auf die Patenterteilung: **30.05.2007**
(21) Anmeldenummer: 03737258.8
(22) Anmeldetag: 14.01.2003
(51) Int. Cl.: C08L 33/12, C08L 51/08, C08F 283/12

(54) **SCHLAGZÄHE FORMMASSEN UND FORMKÖRPER**
IMPACT-RESISTANT MOULDING MATERIALS AND MOULDED BODIES
MATIERES A MOULER ET CORPS MOULES RESISTANT AUX CHOCS

(30) Priorität: 06.02.2002 DE 10204890
(43) Veröffentlichungstag der Anmeldung: 03.11.2004
(73) Patentinhaber: Röhm GmbH, 64293 Darmstadt (DE)
(72) Erfinder: SCHULTES, Klaus, 65197 Wiesbaden (DE); MÜLLER, Reiner, 64584 Biebesheim (DE); HÖSS, Werner, 64347 Griesheim (DE); ALBRECHT, Klaus, 55129 Mainz (DE)
(86) Internationale Anmeldenummer: PCT/EP2003/000266
(87) Internationale Veröffentlichungsnummer: WO 2003/066728

(56) Entgegenhaltungen:
- EP-A- 0 246 537
- EP-A- 0 258 746
- EP-A- 0 308 198
- US-A- 4 690 986

## Beschreibung

Die vorliegende Erfindung betrifft schlagzähe Formmassen aufweisend Poly(meth)acrylat und mindestens ein Siliconkautschuk-Pfropfcopolymerisat und hieraus erhältliche schlagzähe Formkörper.

Für verschiedene Anwendungen werden Formkörper benötigt, die auch bei Kälte eine hervorragende Schlagzähigkeit aufweisen müssen. Beispielsweise gehören hierzu Bauteile für Kühlschränke, Rohre und Automobile, die der Kälte ausgesetzt sein können.

Um diese Eigenschaft zu erzielen, werden Kunststoffe mit sogenannten Schlagzähmodifiern ausgestattet. Derartige Additive sind weithin bekannt.

So werden insbesondere Siliconkautschuk-Pfropfcopolymerisate, die eine Kern-Schale-Struktur (K/S) aufweisen, zur Verbesserung der Schlagzähigkeit eingesetzt. Teilweise haben derartige Modifier auch eine Struktur, die zwei Schalen umfassen (K/S1/S2).

EP 430 134 offenbart die Herstellung von Modifiern zur Verbesserung der Schlagzähigkeit von Formmassen. Hierbei wird ein Kern, bestehend aus einem Silikongummi und einem Acrylkautschuk mit Vinylmonomeren gepfropft. Ferner wird das Material zur Schlagzäh-Modifizierung von Formmassen verwendet - allerdings werden hier nur Polycarbonat (PC) und/oder Polyester Formmassen genannt.

Das Dokument US 4,690,986 stellt eine schlagzähe Formmasse dar, die auf Basis eines Pfropfcopolymerisats (über Emulsionspolymerisation) hergestellt wird. Das Pfropfcopolymerisat ist ein K/S - Produkt. Der Kern besteht u. a. aus einem Vernetzungsmittel (Siloxan mit Methacrylatgruppe über mehrere CH₂ -Gruppen verbunden) und tetrafunktionellem Silan als Vernetzungsmittel. Beschrieben wird sowohl die Formmasse sowie ein Herstellungsverfahren.

In JP 612,135,462 wird eine Formmasse beschrieben, die auf Basis eines Pfropfcopolymerisats (über Emulsionspolymerisation) hergestellt wird. Das Pfropfcopolymerisat besteht aus mit Vinylmonomeren gepfropftem Siloxan.

EP 308 198 offenbart eine Formmasse aus PMMI und gepfropftem Polysiloxan. Das gepfropfte Polysiloxan wird durch Pfropfung von Monomeren und mindestens einem "Pfropf - Vernetzungsmittel" hergestellt. In den Unteransprüchen wird deutlich, daß es sich bei dem Pfropf - Vernetzungsmittel um das in US 4,690,986 beschriebene Vernetzungsmittel (Siloxan mit Methacrylatgruppe über mehrere CH₂ Gruppen verbunden) handelt. Auch wird in den Unteransprüchen das tetrafunktionelle Silan als Vernetzungsmittel erwähnt.

EP 332 188 beschreibt Pfropfcopolymerisate, die den in EP 430134 beschriebenen ähnlich sind. Diese Pfropfcopolymerisate werden zur Modifizierung von Formmassen verwendet. Im Beispiel werden Partikel mit Styrol gepfropft und diese zur Modifizierung von einem Polyether/Polysulfon - Blend eingesetzt.

DE 43 42 048 offenbart Pfropfcopolymerisate mit einem K/S1 /S2-Aufbau. Als Kern fungiert ein Silikonkautschuk, S1 wird überwiegend aus Acrylaten (min. 70 %) hergestellt und zur Herstellung der Schale S2 können z. B. Monomermischungen verwendet werden, die 50-100 % Methylmethacrylat enthalten. In den Unteransprüchen sind auch schlagzähe Formmassen basierend auf den beschriebenen Pfropfcopolymerisaten dargestellt, wobei das Polymer für die Matrix auch hier sehr weit gefaßt ist.

Eine Formmasse, die zu 20-80 % aus herkömmlichen Polymeren und zu 80-20 % aus Pfropfcopolymerisaten besteht, wird in DE 3839287 dargestellt. Das Pfropfcopolymerisat weist K/S1/S2-Aufbau auf, wobei der Kern aus Silikonkautschuk und S1 aus Acrylatkautschuk aufgebaut ist. S2 wird durch Redox - Polymerisation (Emulsion) von verschiedensten Monomeren hergestellt. Als Beispiel wird nur eine schlagzäh modifizierte SAN-Formmasse aufgeführt.

Die Druckschrift WO 99141315 offenbart Dispersionen, die eine Mischung von Partikeln bestehend aus Vinylcopolymeren und bestehend aus mit PMMA umhüllten Silikonkautschuk beinhalten. Diese Dispersion kann u.a. als Schlagzähmodifier eingesetzt werden.

EP 492 376 beschreibt Pfropfcopolymerisate, die eine K/S bzw. K/S1/S2 Struktur aufweisen. Der Kern und die optionale Zwischenschale bestehen aus Silikonkautschuk und sind genauer definiert - die äußere Schale wird durch-Emulsionspolymerisation verschiedenster Monomere hergestellt.

Problematisch ist, daß unterschiedliche Kunststoffe auf den Zusatz von Schlagzähmodifiern verschieden reagieren, wobei die Schlagzähigkeit von Kunststoffen sehr stark von den zur Herstellung verwendeten Monomeren abhängt. So zeigt beispielsweise Polycarbonat von Natur aus sehr gute Schlagzähigkeitswerte. Allerdings sind Bauteile aus diesem Material relativ kratzempfindlich, so daß dieses Polymer für viele Gebiete nicht eingesetzt werden kann. Darüber hinaus genügt die Witterungsbeständigkeit von Polycarbonat für viele Anforderungen nicht.

Im Gegensatz zu dem vorgenannten Kunststoff zeigen Poly(meth)acrylate hervorragende Eigenschaften. Allerdings ist die Schlagzähigkeit dieser Polymere von Natur aus sehr gering. Der Zusatz von bekannten Schlagzähmodifiern führt jedoch nicht zu einer ausreichenden Verbesserung der Schlagzähigkeit in der Kälte.

Problematisch ist insbesondere, daß der Zusatz von großen Mengen an Additiven zu einer Verschlechterung der mechanischen Eigenschaften der Kunststoffe führen kann, so daß die Mengen, die insgesamt zugesetzt werden können, sehr begrenzt sind.

Des weiteren werden viele Gegenstände sowohl bei sehr hohen als auch sehr tiefen Temperaturen eingesetzt. Hierzu gehören beispielsweise Automobile, die im Winter in kühlen Regionen bis -40°C ausgesetzt werden. In Wüstenregionen werden diese Fahrzeuge jedoch bei Temperaturen von über 50°C verwendet.

Problematisch an bekannten Schlagzähmodifiern ist jedoch, daß die Verbesserung der Schlagzähigkeitswerte von der Temperatur abhängig ist.

In Anbetracht des hierin angegebenen und diskutierten Standes der Technik war es mithin Aufgabe der vorliegenden Erfindung Formmassen mit guten mechanischen Eigenschaften anzugeben, die eine hohe Schlagzähigkeit aufweisen.

Eine weitere Aufgabe der Erfindung bestand darin, daß die Formmassen kostengünstig herstellbar sein sollten.

Des weiteren lag der Erfindung die Aufgabe zugrunde, Formmassen bereitzustellen, deren Schlagzähigkeit über einen großen Temperaturbereich in einem akzeptablen Bereich liegen.

Darüber hinaus war es mithin Aufgabe der vorliegenden Erfindung, schlagzähe Formmassen zur Verfügung zu stellen, die mit bekannten Formungsverfahren verarbeitet werden können.

Ein weiteres Ziel der vorliegenden Erfindung bestand darin, schlagzähe Formkörper mit hervorragenden mechanischen Eigenschaften bereitzustellen, die eine hohe Schlagzähigkeit ab einer Temparatur von -40 °C und darüber aufweisen.

Des weiteren sollten die Formmassen eine hohe Witterungsbeständigkeit aufweisen.

Gelöst werden diese Aufgaben sowie weitere, die zwar nicht wörtlich genannt werden, sich aber aus den hierin diskutierten zusammenhängen wie selbstverständlich ableiten lassen oder sich aus diesen zwangsläufig ergeben, durch die in Anspruch 1 beschriebenen . Formmassen. Zweckmäßige Abwandlungen der erfindungsgemäßen Formmassen werden in den auf Anspruch 1 rückbezogenen Unteransprüchen unter Schutz gestellt.

Die Aufgabe in bezug auf die schlagzähen Formkörper wird durch die in Anspruch 16 beschriebenen Maßnahmen gelöst.

Dadurch, daß eine Poly(meth)acrylat aufweisende Formmasse ein Siliconkautschuk-Pfropfcopolymerisat enthält dessen Kern a) aus einem siliciumorganischen Polymer vor der Pfropfung Vinylgruppen umfaßt und dessen Hülle c) aus organischen Polymeren durch radikalische Polymerisation einer Mischung, die Acrylsäureester und Methacrylate umfaßt, erhältlich ist, wobei das Siliconkautschuk-Pfropfcopolymerisat zusammengesetzt ist aus 0,05 bis 95 Gew.-%, bezogen auf das Gesamtgewicht des Copolymerisats, eines Kerns a) aus einem siliciumorganischen Polymer, das der allgemeinen Formel (R₂SiO_{2/2})ₓ · (RSiO_{3/2})_{y} · (SiO_{4/2})_{z} mit x = 0 bis 99,5 Mol-%, y = 0,5 bis 100 Mol-%, z = 0 bis 50 Mol-% entspricht, wobei R gleiche oder verschiedene Alkyl- oder Alkenyl-Reste mit 1 bis 6 C-Atomen, Aryl-Reste oder substituierte Kohlenwasserstoffreste bedeutet, 0 bis 94,5 Gew.-%, bezogen auf das Gesamtgewicht des Copolymerisats, einer Polydialkylsiloxan-Schicht b) und 5 bis 95 Gew.-%, bezogen auf das Gesamtgewicht des Copolymerisats, einer Hülle c), gelingt es Formmassen zur Verfügung zu stellen, die hervorragende mechanische Eigenschaften bei gleichzeitig sehr guten Schlagzähigkeitswerten aufweisen.

Durch die erfindungsgemäßen Maßnahmen werden u.a. insbesondere folgende Vorteile erzielt:
⇒Die erfindungsgemäßen Formmassen zeigen ein sehr gutes Verhalten bei tiefen Temperaturen. So werden insbesondere bei Temperaturen von weniger als 0°C sehr gute Schlagzähigkeitswerte erzielt.
⇒ Die Formmassen der vorliegenden Erfindung können auf bekannte Weise verarbeitet werden.
⇒ Formkörper, die aus den Formmassen gemäß der vorliegenden Lehre erhalten wurden, zeigen einen hervorragenden E-Modul. So zeigen besondere Ausführungsformen einen E-Modul gemäß ISO 527-2 von mindestens 1500, bevorzugt mindestens 1600, besonders bevorzugt mindestens 1700 MPa.
⇒ Des weiteren weisen Formkörper, die aus den erfindungsgemäßen Formmassen hergestellt wurden, eine sehr gute Witterungsbeständigkeit auf.
⇒ Erfindungsgemäße Formkörper sind sehr wärmeresistent. Bevorzugte Formkörper erweichen gemäß Vicat (ISO 306 (B50)) erst oberhalb von 85, bevorzugt oberhalb von 90 und besonders bevorzugt oberhalb von 95°C.

Die Formmassen der vorliegenden Erfindung enthalten Poly(meth)acrylate. Der Ausdruck (Meth)acrylate umfaßt Methacrylate und Acrylate sowie Mischungen aus beiden.

Poly(meth)acrylate sind in der Fachwelt bekannt. Diese Polymere werden im allgemeinen durch radikalische Polymerisation von Mischungen erhalten, die (Meth)acrylate enthalten.

Diese Monomere sind weithin bekannt. Zu diesen gehören unter anderem (Meth)acrylate, die sich von gesättigten Alkoholen ableiten, wie beispielsweise Methyl(meth)acrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat; Aryl(meth)acrylate, wie Benzyl(meth)acrylat oder Phenyl(meth)acrylat, wobei die Arylreste jeweils unsubstituiert oder bis zu vierfach substituiert sein können; Cycloalkyl (meth) acrylate, wie 3-Vinylcyclohexyl(meth)acrylat, Bornyl(meth)acrylat; Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl (meth) acrylat; Glycoldi(meth)acrylate, wie 1,4-Butandiol (meth) acrylat, (Meth)acrylate von Etheralkoholen, wie Tetrahydrofurfuryl(meth)acrylat, Vinyloxyethoxyethyl(meth)acrylat; Amide und Nitrile der (Meth)acrylsäure, wie N-(3-Dimethylaminopropyl) (meth)acrylamid, N-(Diethylphosphono)(meth)acrylamid, 1-Methacryloylamido-2-methyl-2-propanol; schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl (meth) acrylat, Bis((meth)acryloyloxyethyl)sulfid; mehrwertige (Meth)acrylate, wie Trimethyloylpropantri(meth)acrylat.

Neben den zuvor dargelegten (Meth)acrylaten können die zu polymerisierenden Zusammensetzungen auch weitere ungesättigte Monomere aufweisen, die mit den zuvor genannten (Meth)acrylaten copolymerisierbar sind. Im allgemeinen werden diese Verbindungen in einer Menge von 0 bis 50 Gew.-%, vorzugsweise 0 bis 40 Gew.-% und besonders bevorzugt 0 bis 20 Gew.-%, bezogen auf das Gewicht der Monomeren, eingesetzt, wobei die Comonomere einzeln oder als Mischung verwendet werden können.
Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1;
Acrylnitril; Vinylester, wie Vinylacetat; Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole; Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte vinyloxazole;
Vinyl- und Isoprenylether; Maleinsäurederivate, wie beispielsweise Maleinsäureanhydrid, Methylmaleinsäureanhydrid, Maleinimid, Methylmaleinimid; und Diene, wie beispielsweise Divinylbenzol.

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoylperoxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,1 bis 10 Gew.-%, vorzugsweise von 0,5 bis 3 Gew.-%, bezogen auf das Gesamtgewicht der Monomeren, eingesetzt.

Bevorzugte Poly(meth)acrylate sind durch Polymerisation von Mischungen erhältlich, die mindestens 20 Gew.-%, insbesondere mindestens 60 Gew.-% und besonders bevorzugt mindestens 80 Gew.-%, jeweils bezogen auf das Gesamtgewicht der zu polymerisierenden Monomere, Methylmethacrylat aufweisen.

Hierbei können verschiedene Poly(meth)acrylate eingesetzt werden, die sich beispielsweise im Molekulargewicht oder in der Monomerzusammensetzung unterscheiden.

Des weiteren können die Formmassen weitere Polymere enthalten, um die Eigenschaften zu modifizieren. Hierzu gehören unter anderem Polyacrylnitrile, Polystyrole, Polyether, Polyester, Polycarbonate und Polyvinylchloride. Diese Polymere können einzeln oder als Mischung eingesetzt werden, wobei auch Copolymere, die von den zuvor genannten Polymere ableitbar sind, den Formmassen beigefügt werden können. Zu diesen gehören insbesondere Styrol-Acrylnitril-Polymere (SAN), die vorzugsweise den Formmassen in einer Menge von bis zu 45 Gew.-% beigefügt werden.

Besonders bevorzugte Styrol-Acrylnitril-Polymere können durch die Polymerisation von Mischungen erhalten werden, die aus
70 bis 92 Gew.-% Styrol
8 bis 30 Gew.-% Acrylnitril und
0 bis 22 Gew.-% weiterer Comonomere, jeweils bezogen auf das Gesamtgewicht der zu polymerisierenden Monomere, bestehen.

In besonderen Ausgestaltungen beträgt der Anteil der Poly(meth)acrylate mindestens 20 Gew.-%, bevorzugt mindestens 60 Gew.-% und besonders bevorzugt mindestens 80 Gew.-%.

Derartig besonders bevorzugte Formmassen sind unter dem Handelsnamen PLEXIGLAS® von der Fa. Röhm GmbH & Co. KG kommerziell erhältlich.

Das Gewichtsmittel des Molekulargewichts *M̅_{w}* der erfindungsgemäß als Matrixpolymere zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne daß hierdurch eine Einschränkung erfolgen soll.

Zur Verbesserung der Schlagzähigkeitswerte werden den Formmassen erfindungsgemäß Siliconkautschuk-Pfropfcopolymerisate beigemischt, die zusammengesetzt sind aus 0,05 bis 95 Gew.-%, bezogen auf das Gesamtgewicht des Copolymerisats, eines Kerns a) aus einem siliciumorganischen Polymer, das der allgemeinen Formel (R₂SiO_{2/2})ₓ · (RSiO_{3/2})_{y}·(SiO_{4/2})_{z} mit x = 0 bis 99,5 Mol-%, y = 0,5 bis 100 Mol-%, z = 0 bis 50 Mol-% entspricht, wobei R gleiche oder verschiedene Alkyl- oder Alkenyl-Reste mit 1 bis 6 C-Atomen, Aryl-Reste oder substituierte Kohlenwasserstoffreste bedeutet, 0 bis 94,5 Gew.-%, bezogen auf das Gesamtgewicht des Copolymerisats, einer Polydialkylsiloxan-Schicht b) und 5 bis 95 Gew.-%, bezogen auf das Gesamtgewicht des Copolymerisats, einer Hülle c) aus organischen Polymeren, der Kern a) vor der Pfropfung Vinylgruppen umfaßt und die Hülle c) durch radikalische Polymerisation einer Mischung, die Acrylsäureester und Methacrylate umfaßt, erhältlich ist.

Der Kern a) des Siliconkautschuk-Pfropfcopolymerisats umfaßt ein siliciumorganisches Polymer, das der allgemeinen Formel (R₂SiO_{2/2})ₓ·(RSiO_{3/2})_{y}· (SiO_{4/2})_{z} mit x = 0 bis 99,5 Mol-%, y = 0,5 bis 100 Mol-%, z = 0 bis 50 Mol-% entspricht, wobei R gleiche oder verschiedene Alkyl- oder Alkenyl-Reste mit 1 bis 6 C-Atomen, Aryl-Reste oder substituierte Kohlenwasserstoffreste bedeutet.

Vorzugsweise sind die Reste R Alkylreste, wie der Methyl-, Ethyl-, n-Propyl-, Isopropyl-, n-Butyl-, sec.-Butyl-, Amyl-, Hexylrest; Alkenylreste, wie der Ethenyl-, Propenyl-, Butenyl-, Pentenyl-, Hexenyl- und Allylrest; Arylreste, wie der Phenylrest; oder substituierte Kohlenwasserstoffreste.

Beispiele hierfür sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluor-pentylrest, sowie der Chlorphenylrest; Mercaptoalkylreste, wie der 2-Mercaptoethyl- und 3-Mercaptopropyl-rest; Cyanoalkylreste, wie der 2-Cyanoethyl- und 3-Cyanopropylrest; Aminoalkylreste, wie der 3-Aminopropylrest; Acyloxyalkylreste, wie der 3-Acryloxypropyl- und 3-Methacryloxypropylres; Hydroxyalkylreste, wie der Hydroxypropylrest.

Besonders bevorzugt sind die Reste Methyl, Ethyl, Propyl, Phenyl, Ethenyl, 3-Methacryloxypropyl und 3-Mercaptopropyl, wobei weniger als'30 Mol% der Reste im Siloxanpolymerisat Ethenyl, 3-Methacryloxypropyl oder 3-Mercaptopropylgruppen sind.

Erfindungsgemäß weist der Kern a) vor der Pfropfung Vinylgruppen auf. Diese Gruppe kann unmittelbar an ein Si-Atom gebunden sein oder über einen Alkylenrest, wie Methylen, Ethylen, Propylen und Butylen. Dementsprechend können die erfindungsgemäßen Vinylgruppen des Kerns a) unter anderem durch Verwendung von organischen Siliciumverbindungen erhalten werden, die Ethenyl-, Propenyl-, Butenyl-, Pentenyl-, Hexenyl- und/oder Allylreste aufweisen.

Der Gehalt an Vinylgruppen des Kerns a) vor der Pfropfung liegt insbesondere im Bereich von 0,5 bis 10 Mol-%, vorzugsweise 1 bis 6 Mol-% und besonders bevorzugt 2 bis 3 Mol-%. Die Angabe Mol-% versteht sich als molarer Anteil der vinylgruppenhaltigen Ausgangsverbindungen, die rechnerisch eine Vinylgruppe aufweisen, an allen monomeren organischen Siliciumverbindungen, die zur Herstellung des Kerns a) verwendet werden.

Gemäß einer bevorzugten Ausführungsform sind die Vinylgruppen inhomogen im Siliconkern verteilt, wobei der Anteil im äußeren Bereich des Siliconkerns höher ist als im Bereich des Kernschwerpunkts. Vorzugsweise befinden sich 85%, besonders bevorzugt 90% aller Vinylgruppen in der äußeren Schale des Siliconkerns. Diese äußere Schale des Siliconkerns wird durch 40% des Radius gebildet, so daß sich das Volumen der äußeren Schale durch die Formel V= 4π/3*r³ - 4π/3*(0,6*r)³ bestimmt.

Das siliciumorganische Hüllpolymerisat b) besteht vorzugsweise aus Dialkylsiloxanen-Einheiten (R₂SiO_{2/2}), wobei R die Bedeutungen Methyl oder Ethyl hat.

Erfindungsgemäß weist die Hülle c) Polymerisate auf, die aus Methacrylat und Acrylsäureestern umfassenden Mischungen erhältlich sind.

Auf die Definition der Methacrylate und Acrylsäureester kann auf die obige Offenbarung verwiesen werden. Neben den Methacrylaten und Acrylsäureestern können die Mischungen weitere Monomere enthalten, die mit diesen (Meth)acrylaten copolymerisierbar sind. Diese Monomere sind ebenfalls zuvor genannt.

Das bevorzugte Methacrylat ist Methylmethacrylat. Des weiteren sind Acrylsäureester bevorzugt, die 1 bis 8 Kohlenstoffe umfassen. Hierzu gehören Methylacrylat, Ethylacrylat, Propylacrylat, n-Butylacrylat, tert.-Butylacrylat, Pentylacrylat, Hexylacrylat und 2-Ethylhexyl(meth)acrylat. Besonders bevorzugt sind Mischungen, die Methylmethacrylat und Ethylacrylat enthalten.

Das Verhältnis von Acrylsäureester zu Methacrylat kann in weiten Bereichen schwanken. Bevorzugt liegt das Gewichtsverhältnis von Acrylsäureester zu Methacrylat der Mischung zur Herstellung der Hülle c) im Bereich von 50:50 bis 1:99, besonders bevorzugt im Bereich von 10:90 bis 2:98 und ganz besonders bevorzugt im Bereich von 5:95 bis 3:97, ohne daß hierdurch eine Beschränkung erfolgen soll.

Das Verhältnis des Gewichts von Kern a) und Hülle b) zum Gewicht der Hülle c) der Siliconkautschuk-Pfropfcopolymerisate liegt vorzugsweise im Bereich von 90:10 bis 20:80, insbesondere von 80:20 bis 30:70 und besonders bevorzugt von 70:30 bis 35:65, ohne daß hierdurch eine Beschränkung erfolgen soll.

Gemäß einer bevorzugten Ausführungsform weisen die Siliconkautschuk-Pfropfcopolymerisate eine Teilchengröße im Bereich von 5 bis 500 nm, insbesondere von 10 bis 300 nm und besonders bevorzugt von 30 bis 200 nm auf. Die Teilchengröße bezieht sich auf die größte Ausdehnung der Partikel. Bei sphärischen Partikeln ist die Teilchengröße durch den Partikeldurchmesser gegeben.

Die Siliconkautschuk-Pfropfcopolymerisate haben gemäß einem weiteren Aspekt der vorliegenden Erfindung eine monomodale Verteilung mit einem Polydispersitätsindex von maximal 0,4, insbesondere maximal 0,2, ohne daß hierdurch eine Beschränkung erfolgen soll.

Die Teilchengröße kann mit einem Teilchengrößenbestimmungsgerät, welches nach dem Prinzip der Photokorrelationsspektroskopie funktioniert, erhältlich von Fa. Coulter unter den Handelsnamen Coulter N4 in Wasser bei Raumtemperatur (23°C) gemessen werden. Dieses Bestimmungsgerät wird mit entsprechenden Bezugslatices unterschiedlicher Teilchengröße, deren Teilchengröße über Ultrazentrifungenmessungen bestimmt werden, überprüft. Die Teilchengröße bezieht sich dementsprechend auf einen gemäß dem zuvor genannten Verfahren bestimmten Mittelwert.

Die Herstellung der Polysiloxan-Pfropfgrundlage kann nach dem Emulsionspolymerisationsverfahren erfolgen. Hierbei werden zu einer bewegten Emulgator/Wasser-Mischung 0,05 bis 95 Gew.-%, bezogen auf das Gesamtgewicht des herzustellenden Pfropfcopolymerisats, ein oder mehrere monomere Silane vom Typ RₐSi (OR')₄₋ₐ, wobei a = 0, 1 oder 2 ist, zudosiert. Der Rest R' steht für Alkylreste mit 1 bis 6 C-Atomen, Arylreste oder substituierte Kohlenwasserstoffreste, bevorzugt sind Methyl-, Ethyl- und Propylrest. Der Rest R hat die zuvor definierte Bedeutung.

Geeignete Emulgatoren sind Carbonsäuren mit 9 bis 20 C-Atomen, aliphatisch substituierte Benzolsulfonsäuren mit mindestens 6 C-Atomen in den aliphatischen Substituenten, aliphatisch substituierte Naphthalinsulfonsäuren mit mindestens 4 C-Atomen in den aliphatischen Substituenten, aliphatische Sulfonsäuren mit mindestens 6 C-Atomen in den aliphatischen Resten, Silylalkylsulfonsäuren mit mindestens 6 C-Atomen in den Alkylsubstituenten, aliphatisch substituierte Diphenylethersulfonsäuren mit mindestens 6 C-Atomen in den aliphatischen Resten, Alkylhydrogensulfate mit mindestens 6 C-Atomen in den Alkylresten, quarternäre Ammoniumhalogenide oder -hydroxide. Alle genannten Säuren können als solche Oder gegebenenfalls im Gemisch mit ihren Salzen verwendet werden. Wenn anionische Emulgatoren eingesetzt werden, ist es vorteilhaft, solche zu verwenden, deren aliphatische Substituenten mindestens 8 C-Atome enthalten. Als anionische Emulgatoren sind aliphatisch substituierte Benzolsulfonsäuren bevorzugt. Wenn kationische Emulgatoren benutzt werden, ist es vorteilhaft, Halogenide einzusetzen. Die einzusetzende Menge an Emulgator betragt von 0,5 bis 20,0 Gew.-%, vorzugsweise 1,0 bis 3,0 Gew.-%, jeweils bezogen auf die eingesetzte Menge an Organosiliciumverbindungen. Das Silan bzw. das Silangemisch wird dosiert zugegeben. Die Emulsionspolymerisation wird bei einer Temperatur von 30 bis 90°C, vorzugsweise 60 bis 85°C durchgeführt. Gemäß einem bevorzugten Aspekt der vorliegenden Erfindung erfolgt die Herstellung des Kerns a) bei Normaldruck.

Der pH-Wert der Polymerisationsmischung kann in weiten Bereichen schwanken. Vorzugsweise liegt dieser Wert im Bereich von 1 bis 4, besonders bevorzugt von 2 bis 3.

Die Polymerisation zur Herstellung der Pfropfgrundlage kann sowohl in kontinuierlicher Fahrweise als auch diskontinuierlicher Fahrweise durchgeführt werden. Hiervon ist die diskontinuierliche Herstellung bevorzugt.

Bei kontinuierlicher Fahrweise beträgt die Verweilzeit im Reaktor im allgemeinen zwischen 30 und 60 Minuten, ohne daß hierdurch eine Beschränkung erfolgen soll.

Bei diskontinuierlicher Herstellung der Pfropfgrundlage ist es für die Stabilität der Emulsion vorteilhaft nach Ende der Dosierung noch 0,5 bis 5,0 Stunden nachzurühren. Zur weiteren Verbesserung der Stabilität der Polysiloxan-Emulsion kann der bei der Hydrolyse freigesetzte Alkohol, vor allem bei einem hohen Anteil von Silan der allgemeinen Formel RSi(OR')₃, gemäß einer bevorzugten Ausführungsform durch Destillation entfernt werden.

Im ersten Reaktionsschritt besteht die Zusammensetzung der in einer Menge von 0,05 bis 95 Gew.-%, bezogen auf das Gesamtgewicht des Pfropfcopolymerisats, zu dosierenden Silanphase, mit einer oder mehreren Komponenten, aus 0 bis 99,5 Mol% eines Silans der allgemeinen Formel R₂Si(OR')₂ oder eines Oligomeren der Formel (R₂SiO)n mit n = 3 bis 8, 0,5 bis 100 Mol% eines Silans der allgemeinen Formel RSi(OR')₃ und 0 bis 50 Mol% eines Silans der allgemeinen Formel Si(OR')₄, wobei sich die Angaben in Mol% jeweils auf die Bruttozusammensetzung der Pfropfgrundlage beziehen.

Beispiele für Silane der allgemeinen Formel R₂Si(OR')₂ sind Dimethyldiethoxysilan oder Dimethyldimethoxysilan. Beispiele für Oligomere der Formel (R₂SiO)ₙ mit n =3 bis 8 sind Octamethylcyclotetrasiloxan oder Hexamethylcyclotrisiloxan.

Beispiele für Silane der allgemeinen Formel RSi(OR')₃ sind Methyltrimethoxysilan, Phenyltriethoxysilan, Vinyltrimethoxysilan, 3-Chlorpropyltrimethoxysilan,-3-MercaptopropyltrimethoXysilan und Methacryloxypropyltrimethoxysilan.

Beispiele für Silane der allgemeinen Formel Si(OR')₄ sind Tetramethoxysilan oder Tetraethoxysilan. In einer bevorzugten Ausführungsform wird die Pfropfgrundlage vor dem Aufpfropfen der ethylenisch ungesättigten Monomeren noch mit dem siliciumorganischen Hüllpolymerisat b) gepfropft.

Die Herstellung dieser Hülle b) erfolgt ebenfalls nach dem Emulsionspolymerisationsverfahren. Hierzu werden difunktionelle Silane der allgemeinen Formel R₂Si(OR')₂ oder niedermolekulare Siloxane der allgemeinen Formel (R₂SiO_{2/2})ₙ mit n = 3 bis 8 zu der bewegten Emulsion der Pfropfgrundlage zudosiert. Die Rests R und R' haben dabei die bereits genannten Bedeutungen. Vorzugsweise wird kein weiterer Emulgator zugegeben, da die in der Emulsion vorhandene Menge an Emulgator zur Stabilisierung im allgemeinen ausreicht.

Die Polymerisation zur Aufpfropfung der Hülle b) wird bei einer Temperatur von 15 bis 90°C und vorzugsweise 60 bis 85 °C durchgeführt. Hierbei wird üblicherweise bei Normaldruck gearbeitet. Der pH-Wert der Polymerisationsmischung beträgt von 1 bis 4, vorzugsweise von 2 bis 3. Auch dieser Reaktionsschritt kann sowohl kontinuierlich als auch diskontinuierlich erfolgen. Die Verweilzeiten im Reaktor bei kontinuierlicher Darstellung, beziehungsweise die Nachrührzeiten im Reaktor bei diskontinuierlicher Darstellung sind abhängig von der Menge zudosierter Silane bzw. Siloxane und betragen vorzugsweise von 2 bis 6 Stunden. Am zweckmäßigsten ist es, die Reaktionsschritte zur Herstellung der Pfropfgrundlage a) und des Hüllpolymerisats b) in einem geeigneten Reaktor zu kombinieren und gegebenenfalls zum Schluß den gebildeten Alkohol destillativ zu entfernen.

Die difunktionelle Silane der allgemeinen Formel R₂Si(OR')₂ oder niedermolekulare Siloxane der allgemeinen Formel (R₂SiO_{2/2})ₙ, mit n = 3 bis 8 werden in einer solchen Menge zudosiert, daß der Anteil an siliciumorganischem Hüllpolymerisat 0,5 bis 94,5 ' Gew.-%, vorzugsweise 35 bis 70 Gew.-%, bezogen auf das Gesamtgewicht des Pfropfcopolymerisats, beträgt.

Der Festgehalt der so hergestellten Siloxanelastomersole sollte, sowohl ohne als auch mit siliciumorganischem Hüllpolymerisat b), maximal 25 Gew.-% betragen, da sonst ein hoher Anstieg der Viskosität die Weiterverarbeitung der Sole als Pfropfgrundlage erschwert. Aus derartigen Solen durch Koagulation erhältliche Polysiloxane zeigen elastomere Eigenschaften. Eine einfache Methode zur Charakterisierung der Elastizität ist die Bestimmung des Quellfaktors analog der in der US-A 4,775,712 angegebenen Methode. Der Quellfaktor sollte einen Wert > 3 aufweisen.

Im letzten Schritt des Herstellungsverfahrens werden die bereits genannten ethylenisch ungesättigten Monomere auf die, vorzugsweise mit dem siliciumorganischen Hüllpolymerisat b) gepfropfte, Polysiloxanpfropfgrundlage aufgepfropft. Die organischen Monomere werden dazu in einer Menge zudosiert. die 5 bis 95 Gew.-%, vorzugsweise 30 bis 70 Gew.-%, jeweils bezogen auf das Gesamtgewicht des Pfropfcopolymerisats, beträgt.

Die Pfropfung erfolgt vorzugsweise nach dem Emulsionspolymerisationsverfahren in Gegenwart von wasserlöslichen oder monomerlöslichen Radikalinitiatoren. Geeignete Radikalinitiatoren sind wasserlösliche Peroxoverbindungen, organische Peroxide, Hydroperoxide oder Azoverbindungen. Beispiele für derartige Verbindungen wurden zuvor genannt. Besonders bevorzugt wird die Polymerisation der Hülle beispielsweise mit K₂S₂O₈, KHSO₅, NaHSO₅ und Butylhydroperoxid initiiert.

In besonderen Ausführungsformen werden die Radikalinitiatoren mit einer Reduktionskomponente gemischt, so daß die Polymerisation bei geringerer Temperatur durchgeführt werden kann.

Derartige Reduktionskomponenten sind weithin bekannt. Hierzu gehören unter anderem Eisen(II)salze, wie FeSO₄, Natriumbisulfit, Natriumthiosulfat und Natriumhydroxymethylsulfinat. (Natriumformaldehydsulfoxylat).

Oxidations- und Reduktionskomponente werden dabei vorzugsweise in einer Menge von 0,01 bis 2 Gew.-%, bezogen auf die Monomermenge, eingesetzt.

Die Reaktionstemperaturen sind abhängig von der Art des verwendeten Initiators und betragen im allgemeinen von 0 bis 90 °C, vorzugsweise 20 bis 65 °C.

Vorzugsweise wird auch bei diesem Reaktionsschritt, zusätzlich zu dem in der ersten Stufe zugegebenen Emulgator, kein weiterer Emulgator zudosiert.

Eine zu hohe Emulgatorkonzentration kann zu solubilisatfreien Micellen führen, die als Keime für rein organische Latexpartikel fungieren können. Auch dieser Reaktionsschritt kann sowohl kontinuierlich als auch diskontinuierlich durchgeführt werden. Die Isolierung der Pfropfcopolymerisate aus der Emulsion kann nach bekannten Verfahren erfolgen.

Beispielsweise können die Partikel durch Koagulation der Latices mittels Ausfrieren, Salzzugabe oder Zugabe von polaren Lösungsmitteln oder durch Sprühtrocknung isoliert werden.

Mit der Verfahrensweise kann die Partikelgröße nicht nur über den Emulgatorgehalt, sondern auch über die Reaktionstemperatur, den pH-Wert und vor allem über die Zusammensetzung der Pfropfcopolymerisate beeinflußt werden. Die mittlere Partikelgröße kann dabei von 5 bis 500 nm variiert werden.

Die Einführung einer siliciumorganischen Hülle b) vermittelt eine verbesserte Phasenanbindung der Organopolymerhülle c) an die siliciumorganische Pfropfgrundlage.

Die erfindungsgemäßen Formmassen können des weiteren Acrylatkautschuk-Modifier enthalten. Überraschend kann hierdurch ein hervorragendes Schlagzähigkeitsverhalten bei Raumtemperatur (ca. 23°C) der Formkörper erzielt werden, die aus den erfindungsgemäßen Formmassen hergestellt wurden. Besonders wesentlich ist, daß die mechanischen und thermischen Eigenschaften, wie beispielsweise das E-Modul oder die Vicat-Erweichungstemperatur, auf sehr hohem Niveau erhalten bleiben. Wird versucht ein ähnliches Kerbschlagzähigkeitsverhalten bei Raumtemperatur nur durch die Verwendung von Acrylatkautschuk-Modifier oder Siliconkautschuk-Pfropfcopolymerisat zu erzielen, so nehmen diese Werte deutlicher ab.

Derartige Acrylatkautschuk-Modifier sind an sich bekannt. Es handelt sich hierbei um Copolymerisate, die eine Kern-Hülle-Struktur aufweisen, wobei der Kern und die Hülle einen hohen Anteil an den zuvor beschriebenen (Meth)acrylaten aufweisen.

Bevorzugte Acrylatkautschuk-Modifier weisen hierbei eine Struktur mit zwei Schalen auf, die sich in ihrer Zusammensetzung unterscheiden.

Besonders bevorzugte Acrylatkautschuk-Modifier haben unter anderem folgenden Aufbau:
- Kern:: Polymerisat mit einem Methylmethacrylatanteil von mindestens 90 Gew.-%, bezogen auf das Gewicht des Kerns.
- Schale 1:: Polymerisat mit einem Butylacrylatanteil von mindestens 80 Gew.-%, bezogen auf das Gewicht der ersten Schale.
- Schale 2:: Polymerisat mit einem Methylmethacrylatanteil von mindestens 90 Gew.-%, bezogen auf das Gewicht der zweiten Schale.

Beispielsweise kann ein bevorzugter Acrylatkautschuk-Modifier folgenden Aufbau aufweisen: .
- Kern:: Copolymerisat aus Methylmethacrylat (95,7 Gew.-%), Ethylacrylat (4 Gew.-%) und Allylmethacrylat (0,3 Gew.-%)
- S1:: Copolymerisat aus Butylacr-dat (81,2 Gew.-%), Styrol (17,5 Gew.-%) und Allylmethacrylat (1,3 Gew.-%)
- S2:: Copolymerisat aus Methylmethacrylat (96 Gew.-%) und Ethylacrylat (4 Gew.-%)

Das Verhältnis von Kern zu Schale(n) der Acrylatkautschuk-Modifier kann in weiten Bereichen schwanken. Vorzugsweise liegt das Gewichtsverhältnis Kern zu Schale K/S im Bereich von 20:80 bis 80:20, bevorzugt von 30:70 zu 70:30 bis Modifiern mit einer Schale bzw. das Verhältnis von Kern zu Schale 1 zu Schale 2 K/S1/S2 im Bereich von 10:80:10 bis 40:20:40, besonders bevorzugt von 20:60:20 bis 30:40:30 bei Modifiern mit zwei Schalen.

Die Partikelgröße der Acrylatkautschuk-Modifier liegt üblich im Bereich von 50 bis 1000 nm, vorzugsweise 100 bis 500 nm und besonders bevorzugt von 150 bis 450 nm, ohne daß hierdurch eine Beschränkung erfolgen soll.

Gemäß einem besonderen Aspekt der vorliegenden Erfindung liegt das Gewichtsverhältnis von Siliconkautschuk-Pfropfcopolymerisat zu Acrylatkautschuk-Modifier im Bereich von 1:10 bis 10:1, vorzugsweise von 4:6 bis 6:4.

Besondere Formmassen bestehen aus
f1) 20 bis 95 Gew.-% (Meth)acrylatpolymere,
f2) 0 bis 45 Gew.-% Styrol-Acrylnitril-Polymere,
f3) 5 bis 60 Gew.-% Siliconkautschuk-Pfropfcopolymerisate
f4) 0 bis 60 Gew.-% auf Acrylatkautschuk basierende Schlagzähmodifier, jeweils bezogen auf das Gewicht der Komponenten f1 bis f4, und üblichen Additiven und Zuschlagsstoffen.

Die Formmassen können übliche Zusatzstoffe aller Art enthalten. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterungsschutzmittel und Weichmacher.

Aus den zuvor beschriebenen Formmassen können durch bekannte Verfahren, wie beispielsweise Spritzguß oder Extrusion Formkörper erhalten werden, die hervorragende Kerbschlagzähigkeitswerte aufweisen.

Gemäß einem besonderen Aspekt der vorliegenden Erfindung können so erhaltene Formkörper eine Vicat-Erweichungstemperatur nach ISO 306 (B50) von mindestens 85, bevorzugt mindestens 90 und besonders bevorzugt mindestens 95°C, eine Kerbschlagzähigkeit KSZ (Izod 180/1eA, 1,8 MPa) nach ISO 180 von mindestens 3,0 kJ/m² bei -20°C und von mindestens 2,5 kJ/m² bei -40°C, ein E-Modul nach ISO 527-2 von mindestens 1500, bevorzugt mindestens 1600, besonders bevorzugt mindestens 1700 MPa aufweisen.

Die erfindungsgemäße Formmasse eignet sich insbesondere zur Herstellung von Spiegelgehäusen, Spoilern von Fahrzeugen, Rohren, Abdeckungen oder Bauelementen für Kühlschränke.

Nachfolgend wird die Erfindung durch Beispiele und Vergleichsbeispiele eingehender erläutert.

### Herstellung der Siliconpfropfcopolymerisate

Folgende PDMS-Dispersionen, ohne Hülle C, mit einem Feststoffgehalt von 20% wurden in Anlehnung an die in EP-0 492 376 auf Seite 5 bis 7 beschriebenen Beispiele hergestellt:
1. SLM 445205/GK 591 Siliconkautschuk Dispersion mit einem Gehalt von 2 mol-% an Methacryl-Gruppen
2. SLM 445205/GK 592
   Siliconkautschuk Dispersion mit einem Gehalt von 2 mol-% an Vinyl-Gruppen
3. SLM-445205/GK 645
   Siliconkautschuk-Dispersion mit einem Gehalt von 3 mol-% an Vinyl-Gruppen
4. SLM 445205/GK 643
   Siliconkautschuk Dispersion mit einem Gehalt von 2 mol-% an Vinyl-Gruppen

Vorschrift zur Herstellung der Siliconkautschuk-Copolymerisate aus den zuvor genannten Siliconkautschuk-Dispersionen

Bei 55°C (Regelung der Kessel-Außentemperatur) wird unter Rühren die in Tabelle 1 angegebene PDMS Dispersion im Polymerisationskessel vorgelegt. Anschließend erfolgt die Zugabe von 3 g konzentrierter Essigsäure und 0,0035 g Eisen(2)sulfat. Danach wird der Mischung eine Natriumhydoxymethylsulfinatlösung, die 2,8 g Natriumhydoxymethylsulfinat und 50 g Wasser enthält, mittels eines Zutropftrichters über ca. 20 min zugegeben. Gleichzeitig wird mit der Zugabe der jeweiligen Monomermischung begonnen, welche auch 2 g Butylhydroperoxid als Initiator enthält, wobei die Zulaufgeschwindigkeit der Mischung aus Monomer und Initiator so eingestellt wird, daß Zugabe dieser Mischung über einen Zeitraum 3 Stunden erfolgt. Nach Zulaufende wird die Temperatur zur Nachreaktion 30 Minuten weiterhin bei 55°C gehalten. Anschließend wird auf 30°C abgekühlt und die Dispersion über ein DIN 70 Siebgewebe filtriert.

Gemäß dem zuvor angegebenen Verfahren wurden folgende, Siliconpfropfcopolymerisate hergestellt:

**Tabelle 1:**

| | Monomermischung | PDMS-Kern |
|---|---|---|
| Modifier A | Methylmethacrylat/ Ethylacrylat | SLM 445205/ GK 592 |
| | 761,3 g/ 31,7 g | 5950 g |
| Modifier B | Methylmethacrylat | SLM 445205/GK 591 |
| | 793 g | 5950 g |
| Modifier C | Methylmethacrylat | SLM 445205/GK 592 |
| | 793 g | 5950 g |
| Modifier D | Methylmethacrylat/ Ethylacrylat | SLM 445205/GK 643 |
| | 934,7 g/ 38,9 g | 5950 g |
| Modifier E | Methylmethacrylat/ Ethylacrylat | SLM 45205/ GK 645 |
| | 761,3 g/ 31,7 g | 5950 g |
| Modifier F | Methylmethacrylat/ Ethylacrylat | SLM 45205/ GK 643 |
| | 761,3 g/ 31,7 g | 5950 g |
| Modifier G | Methylmethacrylat/ Ethylacrylat | SLM 45205/ GK 643 |
| | 489,6 g/ 20,4 g | 5950 g |

Die gemäß Tabelle 1 hergestellten K/S-Modifier wiesen die in Tabelle 2 dargestellte, mit einem Coulter N4-Gerät bestimmte Teilchengröße auf, wobei das Kern/Schale-Verhältnis in Tabelle 2 ebenfalls angegeben ist.

**Tabelle 2**

| | Teilchengröße Radius [nm] | Kern/Schale-Verhältnis |
|---|---|---|
| Modifier A | 72 | 60/40 |
| Modifier B | 57 | 60/40 |
| Modifier C | 67 | 60/40 |
| Modifier D | 80 | 55/45 |
| Modifier E | 67 | 60/40 |
| Modifier F | 78 | 60/40 |
| Modifier G | 75 | 70/30 |

Die Dispersionen werden bei -20°C eingefroren und nach 2 Tagen aufgetaut. Anschließend wird der Feststoff abfiltriert und bei 60°C getrocknet.

Beispiele 1 bis 6 sowie Vergleichsbeispiele 1 und 2 Die so erhaltenen Partikel werden mittels eines Extruders mit einer von Röhm GmbH & Co. KG unter dem Namen Plexiglas® 7N kommerziell erhältlichen Polymethylmethacrylat-Formmasse gemischt. Aus den Formmassen wurden durch Extrusion Prüfkörper hergestellt, an denen die mechanischen und thermischen Eigenschaften gemessen werden.

Die Bestimmung der Strangaufweitung erfolgte gemäß DIN 54811 (1984). Die Messung des Volumen-Fließindex (MVR) erfolgte gemäß Prüfnorm ISO 1133 (1997) bei 230°C und einer Belastung von 3,8 kg. Die Erweichungstemperatur wird gemäß DIN ISO 306 (Aug. 1994); Mini-Vicat-Anlage (16h/80°C) bestimmt. Die Messung der Izod-Kerbschlagzähigkeit wird gemäß ISO 180 (1993) durchgeführt. Der Elastizitätsmodul wird nach ISO 527-2 ermittelt.

Die verwendeten Mengen an Partikeln und an PMMA-Formmasse sind in Tabelle 3 dargelegt.

**Tabelle 3**

| | Modifier. | Plexiglas® 7N |
|---|---|---|
| Beispiel 1 | Modifier A | |
| | 22,5 g | 77,5 g |
| Vergleichsbeispiel 1 | Modifier B | |
| | 22,5 g | 77,5 g |
| Vergleichsbeispiel 2 | Modifier C | |
| | 22,5 g | 77,5 g |
| Beispiel 2 | Modifier D | |
| | 24,5 g | 75,5 g |
| Beispiel 3 | Modifier E | |
| | 22,5 g | 77,5 g |
| Beispiel 4 | Modifier F | |
| | 22,5 g | 77,5 g |
| Beispiel 5 | Modifier G | |
| | 19,3 g | 80,7 g |

Die erhaltenen mechanischen und thermischen Eigenschaften sind in Tabelle 4 angegeben.

**Tabelle 4**

| | Beisp. 1 | Vergl.-Beisp. 1 | Vergl.-Beisp. 2 |
|---|---|---|---|
| Strangaufweitung [%] | 22,7 | 15,4 | 26,7 |
| Viskosität ηₛ (220 °C/5 MPa) | 2180 | 2447 | 2075 |
| [Pa s] | | | |
| Mini-Vicat [°C] | 100,5 | 99,1 | 98,7 |
| Izod-KSZ [kJ/m²] | | | |
| 23°C | 5,6 | 3,22 | 5,25 |
| -20°C | 5,0 | 2,88 | 4,18 |
| -40 °C | 4,4 | | |
| E-Modul [MPa] | 2320 | 2129 | 2277 |

**Tabelle 4: Fortsetzung**

| | Beisp. 2 | Beisp. 3 | Beisp. 4 |
|---|---|---|---|
| Strangaufweitung [%] | | | |
| MVR (230°C/3,8kg) [cm³/10 min] | 2,25 | 1,94 | 2,45 |
| Mini-Vicat [°C] | 101,0 | 100,6 | 100,9 |
| Izod-KSZ [kJ/m²] | | | |
| 23°C | 6,4 | 5,7 | 6,1 |
| -20°C | 5,4 | 4,5 | 5,3 |
| E-Modul [MPa] | | | |

**Tabelle 4: Fortsetzung**

| | Beisp. 5 |
|---|---|
| Strangaufweitung [%] | |
| MVR [cm³/10min] | 1,7 |
| Mini-Vicat [°C] | 100,8 |
| Izod-KSZ [kJ/m²] | |
| 23°C | 6,3 |
| -20°C | 4,9 |
| E-Modul [MPa] | |

Aus den in Tabelle 4 dargestellten Daten ist ersichtlich, daß die Schlagzähigkeit von PMMA-Formmassen durch Modifier in hervorragender Weise verbessert werden können, die dadurch erhältlich sind daß auf einen vinylgruppenhaltigen Kern eine Schale aus einer Mischung gepfropft wird, die Acrylsäureester und Methacrylate umfaßt.

### Vergleichsbeispiel 3

Gemäß der Lehre der Druckschrift DE 33 00 526 wurde ein auf Acrylatkautschuk basierender Modifier hergestellt. Dieser Modifier wies folgende Zusammensetzung auf:
- Kern:: Copolymerisat aus Methylmethacrylat (95,7 Gew.-%), Ethylacrylat (4 Gew.-%) und Allylmethacrylat (0,3 Gew.-%)
- S1:: Copolymerisat aus Butylacr-dat (81,2 Gew.-%), Styrol (17,5 Gew.-%) und Allylmethacrylat (1,3 Gew.-%)
- S2:: Copolymerisat aus Methylmethacrylat (96 Gew.-%) und Ethylacrylat (4 Gew.-%)

19,7 g dieses Modifier wurde gemäß dem oben beschriebenen Verfahren mit 80,3 g der zuvor genannten Polymethylmethacrylat-Formmasse gemischt.

Die Eigenschaften dieser Formmasse wurde gemäß den oben genannten Verfahren untersucht, wobei die Ergebnisse in Tabelle 5 dargestellt sind.

### Beispiel 6

13,3 g Modifier A und 13,1 g des in Vergleichsbeispiel 3 verwendeten Acrylatkautschukmodifiers wurden in 73,6 g der zuvor genannten Polymethylmethacrylat-Formmasse gemischt.

Die Eigenschaften dieser Formmasse wurde gemäß den oben genannten Verfahren untersucht, wobei die Ergebnisse in Tabelle 5 dargestellt sind.

**Tabelle 5**

| | Beisp. 1 | Vergl.-Beisp. 3 | Beisp. 6 |
|---|---|---|---|
| Strangaufweitung [%] | 22,7 | 25 | 19,8 |
| Viskosität ηₛ (220 °C/5 MPa) | 2180 | 1930 | 2380 |
| [Pa s] | | | |
| Mini-Vicat [°C] | 100,5 | 100 | 100 |
| Izod-KSZ [kJ/m²] | | | |
| 23°C | 5,6 | 4,3 | 6,4 |
| E-Modul [MPa] | 2320 | 2400 | 2200 |

Die Tabelle 5 zeigt, daß Mischungen von Acrylatkautschukmodifiern mit Siliconkautschukmodifiern überragende Schlagzähigkeitswerte bei Raumtemperatur aufweisen. Die Mischungen wurden so gewählt, daß diese eine in etwa vergleichbare Erweichungstemperatur aufwiesen. Diese Verbesserung der Schlagzähigkeitswerte bei Raumtemperatur ist auf einen Synergismus zurückzuführen, der nicht vorhersehbar ist.

## Patentansprüche

1. Schlagzähe Formmasse aufweisend Poly(meth)acrylat und mindestens ein Siliconkautschuk-Pfropfcopolymerisat, das zusammengesetzt ist aus 0,05 bis 95 Gew.-%, bezogen auf das Gesamtgewicht des Copolymerisats, eines Kerns a) aus einem siliciumorganischen Polymer, das der allgemeinen Formel (R₂SiO_{2/2})ₓ· (RSiO_{3/2})_{y}· (SiO_{4/2})_{z} mit x = 0 bis 99,5 Mol-%, y = 0,5 bis 100 Mol-%, z = 0 bis 50 Mol-% entspricht, wobei R gleiche oder verschiedene Alkyl- oder Alkenyl-Reste mit 1 bis 6 C-Atomen, Aryl-Reste oder substituierte Kohlenwasserstoffreste bedeutet,
0 bis 94,5 Gew.-%, bezogen auf das Gesamtgewicht des Copolymerisats, einer Polydialkylsiloxan-Schicht b) und
5 bis 95 Gew.-%, bezogen auf das Gesamtgewicht des Copolymerisats, einer Hülle c) aus organischen Polymeren, **dadurch gekennzeichnet, daß** der Kern a) vor der Pfropfung Vinylgruppen umfaßt und die Hülle c) durch radikalische Polymerisation einer Mischung, die Acrylsäureester und Methacrylate umfaßt, erhältlich ist.

2. Schlagzähe Formmasse gemäß Anspruch 1, **dadurch gekennzeichnet, daß** das Gewichtsverhältnis von Kern a) und Schicht b)zur Hülle c) im Bereich von 70:30 bis 35:65 liegt.

3. Schlagzähe Formmasse gemäß Anspruch 1 oder 2, **dadurch gekennzeichnet**, das Gewichtsverhältnis von Acrylsäureester zu Methacrylat der Mischung zur Herstellung der Hülle c) im Bereich von 50:50 bis 1:99 liegt.

4. Schlagzähe Formmasse gemäß einem oder mehreren der vorhergehenden Ansprüche, **dadurch gekennzeichnet, daß** die Formmasse mindestens 55 Gew.-% Poly(meth)acrylate, bezogen auf das Gesamtgewicht, enthält.

5. Schlagzähe Formmasse gemäß einem oder mehreren der vorhergehenden Ansprüche, **dadurch gekennzeichnet, daß** die Formmasse mindestens einen auf Acrylatkautschuk basierenden Schlagzähmodifier aufweist.

6. Schlagzähe Formmasse gemäß Anspruch 5, **dadurch gekennzeichnet, daß** die Partikelgröße des auf Acrylatkautschuk basierenden Schlagzähmodifiers die Partikelgröße im Bereich von 50 bis 1000 nm im Durchmesser liegt.

7. Schlagzähe Formmasse gemäß einem oder mehreren der vorhergehenden Ansprüche, **dadurch gekennzeichnet, daß** die Formmasse Styrol-Acrylnitril-Polymere enthält.

8. Schlagzähe Formmasse gemäß Anspruch 7, **dadurch gekennzeichnet, daß** die Styrol-Acrylnitril-Polymere durch Polymerisation einer Mischung erhalten wurden, die aus
70 bis 92 Gew.-% Styrol
8 bis 30 Gew.-% Acrylnitril und
0 bis 22 Gew.-% weiterer Comonomere, jeweils bezogen auf das Gesamtgewicht der zu polymerisierenden Monomere, besteht.

9. Schlagzähe Formmasse gemäß einem oder mehreren der vorhergehenden Ansprüche, **dadurch gekennzeichnet, daß** die Formmasse
f1) 20 bis 95 Gew.-% (Meth)acrylatpolymere,
f2) 0 bis 45 Gew.-% Styrol-Acrylnitril-Polymere,
f3) 5 bis 60 Gew.-% Siliconkautschuk-Pfropfcopolymerisate
f4) 0 bis 60 Gew.-% auf Acrylatkautschuk basierende Schlagzähmodifier, jeweils bezogen auf das Gewicht der Komponenten f1 bis f4, und üblichen Additiven und Zuschlagsstoffen besteht.

10. Schlagzähe Formmasse gemäß einem oder mehreren der vorhergehenden Ansprüche, **dadurch gekennzeichnet, daß** die Siliconkautschuk-Pfropfcopolymerisate eine Teilchengröße im Bereich von 10 bis 300 nm im Durchmesser aufweisen.

11. Schlagzähe Formmasse gemäß einem oder mehreren der vorhergehenden Ansprüche, **dadurch gekennzeichnet, daß** die Hülle c) durch Polymerisation einer Mischung, die Methylmethacrylat und Acrylsäureester mit 1 bis 8 Kohlenstoffatomen umfaßt, erhalten wurde.

12. Schlagzähe Formmasse gemäß einem oder mehreren der vorhergehenden Ansprüche, **dadurch gekennzeichnet, daß** Acrylsäureester ausgewählt ist aus Ethylacrylat und/oder Butylacrylat.

13. Schlagzähe Formmasse gemäß einem oder mehreren der vorhergehenden Ansprüche, **dadurch gekennzeichnet, daß** der Gehalt an Vinylgruppen des Kerns a) im Bereich von 2 bis 3 Mol-% liegt, bezogen auf das Gewicht des Kerns.

14. Schlagzäher Formkörper erhältlich durch Extrusion oder Spritzguß einer Formmasse gemäß einem oder mehreren der Ansprüche 1 bis 13.

15. Schlagzäher Formkörper gemäß Anspruch 14, **dadurch gekennzeichnet, daß** der Formkörper eine Vicat-Erweichungstemperatur nach ISO 306 (B50) von mindestens 85°C, eine Kerbschlagzähigkeit KSZ (Izod 180/1eA, 1,8 MPa) nach ISO 180 von mindestens 3,0 kJ/m² bei -20°C und von mindestens 2,5 kJ/m² bei - 40°C, einen E-Modul nach ISO 527-2 von mindestens 1500 MPa aufweist.

16. Schlagzäher Formkörper gemäß Anspruch 14 oder 15, **dadurch gekennzeichnet, daß** der Formkörper ein Spiegelgehäuse oder ein Spoiler eines Fahrzeugs, ein Rohr, eine Abdeckung oder ein Bauelement eines Kühlschranks ist.

## Claims

1. An impact-resistant molding material comprising poly(meth)acrylate and at least one silicone rubber graft copolymer composed of from 0.05 to 95% by weight, based on the total weight of the copolymer, of a core a) composed of an organosilicon polymer which has the general formula (R₂SiO_{2/2})ₓ·(RSiO_{3/2})_{y}·(SiO_{4/2})_{z} where x = from 0 to 99.5 mol%, y = from 0.5 to 100 mol%, z = from 0 to 50 mol%, where R means identical or different alkyl or alkenyl radicals having from 1 to 6 carbon atoms, aryl radicals, or substituted hydrocarbon radicals,
from 0 to 94.5% by weight, based on the total weight of the copolymer, of a polydialkylsiloxane layer b), and
from 5 to 95% by weight, based on the total weight of the copolymer, of a shell c) composed of organic polymers, **characterized in that** the core a) encompasses vinyl groups prior to the grafting process, and the shell c) is obtainable via free-radical polymerization of a mixture in which acrylic esters and methacrylates are present.

2. The impact-resistant molding material as claimed in claim 1, **characterized in that** the ratio by weight of core a) and layer b) to the shell c) is in the range from 70:30 to 35:65.

3. The impact-resistant molding material as claimed in claim 1 or 2, **characterized in that** the ratio by weight of acrylic ester to methacrylate in the mixture for preparing the shell c) is in the range from 50:50 to 1:99.

4. The impact-resistant molding material as claimed in one or more of the preceding claims, **characterized in that** the molding material comprises at least 55% by weight of poly(meth)acrylates, based on the total weight.

5. The impact-resistant molding material as claimed in one or more of the preceding claims, **characterized in that** the molding material comprises at least one acrylate-rubber-based impact modifier.

6. The impact-resistant molding material as claimed in claim 5, **characterized in that** the particle diameter of the acrylate-rubber-based impact modifier is in the range from 50 to 1000 nm.

7. The impact-resistant molding material as claimed in one or more of the preceding claims, **characterized in that** it comprises styrene-acrylonitrile polymers.

8. The impact-resistant molding material as claimed in claim 7, **characterized in that** the styreneacrylonitrile polymers were obtained via polymerization of a mixture which is composed of
from 70 to 92% by weight of styrene
from 8 to 30% by weight of acrylonitrile, and
from 0 to 22% by weight of other comonomers, based in each case on the total weight of the monomers to be polymerized.

9. The impact-resistant molding material as claimed in one or more of the preceding claims, **characterized in that** the molding material comprises
f1) from 20 to 95% by weight of (meth)acrylate polymers,
f2) from 0 to 45% by weight of styrene-acrylonitrile polymers,
f3) from 5 to 60% by weight of silicone rubber graft copolymers,
f4) from 0 to 60% by weight of acrylate-rubber-based impact modifier, based in each case on the weight of components f1-f4, and conventional additives.

10. The impact-resistant molding material as claimed in one or more of the preceding claims, **characterized in that** the silicone rubber graft copolymers have a particle diameter in the range from 10 to 300 nm.

11. The impact-resistant molding material as claimed in one or more of the preceding claims, **characterized in that** the shell c) was obtained via polymerization of a mixture in which methyl methacrylate and acrylic ester having from 1 to 8 carbon atoms are present.

12. The impact-resistant molding material as claimed in one or more of the preceding claims, **characterized in that** acrylic ester has been selected from ethyl acrylate and/or butyl acrylate.

13. The impact-resistant molding material as claimed in one or more of the preceding claims, **characterized in that** the content of vinyl groups in the core a) is in the range from 2 to 3 mol%, based on the weight of the core.

14. An impact-resistant molding obtainable via extrusion or injection molding of a molding material as claimed in one or more of claims 1 to 13.

15. The impact-resistant molding as claimed in claim 14, **characterized in that** the molding has a Vicat softening point to ISO 306 (B50) of at least 85°C, a notched impact strength NIS (Izod 180/1eA, 1.8 MPa) to ISO 180 of at least 3.0 kJ/m² at -20°C and of at least 2.5 kJ/m² at -40°C, a modulus of elasticity to ISO 527-2 of at least 1500 MPa.

16. The impact-resistant molding as claimed in claim 14 or 15, **characterized in that** the molding is a mirror housing or a spoiler for a vehicle, or is a pipe, or a protective cover, or a component of a refrigerator.

## Revendications

1. Masse de moulage résistante aux chocs présentant du poly(méth)acrylate et au moins un copolymère greffé de type de caoutchouc de silicone, qui est constitué par 0,05 à 95% en poids, par rapport au poids total du copolymère, d'un noyau a) en polymère organosilicié, qui présente la formule générale (R₂SiO_{2/2})ₓ*(RSiO_{3/2})_{y}*(SiO_{4/2})_{z} avec x = 0 à 99,5% en mole, y = 0,5 à 100% en mole, z = 0 à 50% en mole, R représentant des radicaux alkyle ou alcényle identiques ou différents comprenant 1 à 6 atomes de carbone, des radicaux aryle ou des radicaux hydrocarbonés substitués,
0 à 94,5% en poids, par rapport au poids total du copolymère, d'une couche b) en polydialkylsiloxane et
5 à 95% en poids, par rapport au poids total du copolymère, d'une enveloppe c) constituée par des polymères organiques, **caractérisée en ce que** le noyau a) comprend, avant le greffage, des groupes vinyle et l'enveloppe c) est obtenue par polymérisation radicalaire d'un mélange qui comprend des esters de l'acide acrylique et des méthacrylates.

2. Masse de moulage résistante aux chocs selon la revendication 1, **caractérisée en ce que** le rapport pondéral du noyau a) et de la couche b) à enveloppe c) est situé dans la plage de 70:30 à 35:65.

3. Masse de moulage résistante aux chocs selon la revendication 1 ou 2, **caractérisée en ce que** le rapport pondéral d'ester d'acide acrylique à méthacrylate du mélange pour la préparation de l'enveloppe c) est situé dans la plage de 50:50 à 1:99.

4. Masse de moulage résistante aux chocs selon l'une ou plusieurs des revendications précédentes, **caractérisée en ce que** la masse de moulage contient au moins 55% en poids de poly(méth)acrylates, par rapport au poids total.

5. Masse de moulage résistante aux chocs selon l'une ou plusieurs des revendications précédentes, **caractérisée en ce que** la masse de moulage contient au moins un agent de modification de la résistance aux chocs à base de caoutchouc d'acrylate.

6. Masse de moulage résistante aux chocs selon la revendication 5, **caractérisée en ce que** la taille des particules de l'agent de modification de la résistance aux chocs à base de caoutchouc d'acrylate se situe dans la plage de 50 à 1 000 nm en diamètre.

7. Masse de moulage résistante aux chocs selon l'une ou plusieurs des revendications précédentes, **caractérisée en ce que** la masse de moulage contient des polymères de styrène-acrylonitrile.

8. Masse de moulage résistante aux chocs selon la revendication 7, **caractérisée en ce que** les polymères de styrène-acrylonitrile sont obtenus par polymérisation d'un mélange constitué par
70 à 92% en poids de styrène
8 à 30% en poids d'acrylonitrile et
0 à 22% en poids d'autres comonomères à chaque fois par rapport au poids total des monomères à polymériser.

9. Masse de moulage résistante aux chocs selon l'une ou plusieurs des revendications précédentes, **caractérisée en ce que** la masse de moulage est constituée par
f1) 20 à 95% en poids de polymères de (méth)acrylate,
f2) 0 à 45% en poids de polymères de styrène-acrylonitrile,
f3) 5 à 60% en poids de copolymères greffés de type de caoutchouc de silicone
f4) 0 à 60% en poids d'agent de modification de la résistance aux chocs à base de caoutchouc d'acrylate, à chaque fois par rapport au poids des composants f1 à f4 et des additifs et agrégats usuels.

10. Masse de moulage résistante aux chocs selon l'une ou plusieurs des revendications précédentes, **caractérisée en ce que** les copolymères greffés de type de caoutchouc de silicone présentent une grosseur de particules dans la plage de 10 à 300 nm en diamètre.

11. Masse de moulage résistante aux chocs selon l'une ou plusieurs des revendications précédentes, **caractérisée en ce que** l'enveloppe c) est obtenue par polymérisation d'un mélange qui comprend du méthacrylate de méthyle et des esters de l'acide acrylique comprenant 1 à 8 atomes de carbone.

12. Masse de moulage résistante aux chocs selon l'une ou plusieurs des revendications précédentes, **caractérisée en ce que** l'ester de l'acide acrylique est choisi parmi l'acrylate d'éthyle et/ou l'acrylate de butyle.

13. Masse de moulage résistante aux chocs selon l'une ou plusieurs des revendications précédentes, **caractérisée en ce que** la teneur en groupements vinyle du noyau a) se situe dans la plage de 2 à 3% en mole, par rapport au poids du noyau.

14. Corps moulé résistant aux chocs pouvant être obtenu par extrusion ou moulage par injection d'une masse de moulage selon l'une ou plusieurs des revendications 1 à 13.

15. Corps moulé résistant aux chocs selon la revendication 14, **caractérisé en ce que** le corps moulé présente une température de ramollissement de Vicat selon la norme ISO 306 (B50) d'au moins 85°C, une résistance aux chocs sur éprouvette entaillée (Izod 180/1eA, 1,8 MPa) selon la norme ISO 180 d'au moins 3,0 kJ/m² à -20°C et d'au moins 2,5 kJ/m² à -40°C, un module E selon la norme ISO 527-2 d'au moins 1 500 MPa.

16. Corps moulé résistant aux chocs selon la revendication 14 ou 15, **caractérisé en ce que** le corps moulé est un boîtier pour miroir ou un spoiler d'un véhicule, un tuyau, un recouvrement ou un élément d'un réfrigérateur.
